# EUROPÄISCHE PATENTSCHRIFT

(11) **EP 1 565 869 B1**
(45) Veröffentlichungstag und Bekanntmachung des Hinweises auf die Patenterteilung: **16.04.2008**
(21) Anmeldenummer: 03776831.4
(22) Anmeldetag: 03.11.2003
(51) Int. Cl.: G06K 7/00, G06K 7/08

(54) **KARTENHALTEVORRICHTUNG IN EINEM KARTENBEARBEITUNGSGERÄT**
CARD-HOLDING DEVICE IN A CARD-PROCESSING APPARATUS
DISPOSITIF DE RETENUE DE CARTE DANS UN APPAREIL DE TRAITEMENT DE CARTE

(30) Priorität: 27.11.2002 DE 10255257; 21.01.2003 DE 10302406
(43) Veröffentlichungstag der Anmeldung: 24.08.2005
(73) Patentinhaber: Wincor Nixdorf International GmbH, 33106 Paderborn (DE)
(72) Erfinder: NEUBAUER, Lutz, 33181 Wünnenberg-Leiberg (DE); KULIK, Thorsten, 33154 Salzkotten (DE); LANDWEHR, Martin, 33100 Paderborn (DE)
(86) Internationale Anmeldenummer: PCT/DE2003/003642
(87) Internationale Veröffentlichungsnummer: WO 2004/049236

(56) Entgegenhaltungen:
- EP-A- 0 745 949
- DD-A- 157 944
- DE-A- 19 535 787

## Beschreibung

Die Erfindung betrifft eine Kartenhaltevorrichtung in einem Kartenbearbeitungsgerät. Sie geht aus von der DE 195 35 787 A1.

Es sind Manipulationsversuche an Kartenbearbeitungsgeräten von Geldautomaten bekannt geworden, bei denen mittels einer vor den Kartenschlitz des Kartenbearbeitungsgerätes gesetzten Fangeinrichtung eine Kreditkarte gefangen wird, so dass sie von der Transporteinrichtung des Kartenbearbeitungsgerätes weder eingezogen noch zum Kartenschlitz zurück transportiert werden kann. Zu einem späteren Zeitpunkt wird die Fangeinrichtung mitsamt der gefangenen Kreditkarte von dem Kartenbearbeitungsgerät entfernt, wodurch die Kreditkarte in die Hand Unbefugter gelangt.

In der DE 195 35 787 A1 ist deshalb ein Verfahren und eine Vorrichtung vorgeschlagen worden, die eine Technik zur Zerstörung gespeicherter Informationen beinhalten, wenn eine Karte absichtlich aus einem Magnetkarten-Lesegerät herausgezogen wird. Bei dem vorgeschlagenen Verfahren wird ein außergewöhnliches Anhalten einer Magnetkarte sowie eine Bewegung der Karte nach dem Anhalten erfasst und eine magnetische Informationszerstörungs-Vorrichtung in Abhängigkeit von der Bewegung aktiviert.

Ein solches Verfahren ist nur für Magnetkarten geeignet, zumindest kontaktbehaftete Chipkarten können nach diesem Verfahren nicht gelöscht werden, da bei einem vorzeitigen Anhalten der Chipkarte deren Kontakte nicht mit denen des Kartenbearbeitungsgerätes in Verbindung kommen. Außerdem muss dem rechtmäßigen Kartenbesitzer nach dem Löschen eine neue Karte ausgehändigt werden, was zu zeitlichen Verzögerungen und zusätzlichen Kosten führt.

Aufgabe der Erfindung ist es daher, ein Kartenbearbeitungsgerät mit einer Vorrichtung zum Schutz von Kreditkarten gegen Entwendung vorzuschlagen, die für alle Kartentypen geeignet ist.

Die Aufgabe wird durch die Merkmale des Anspruchs 1 gelöst.

Die Erfindung geht von der Überlegung aus, dass eine Kreditkarte, die mittels einer widerrechtlich an dem Kartenbearbeitungsgerät angebrachten Fangeinrichtung gefangen wird, nicht aus dem Kartenschacht gezogen werden kann, wenn man eine Ausziehsperre vorsieht. Erfindungsgemäß ist diese durch eine Haltevorrichtung realisiert, welche die Karte unverrückbar festhält, auch wenn mit großer Kraft versucht wird, die Fangeinrichtung mitsamt der Karte aus dem Kartenschacht zu ziehen. Die Beweglichkeit der Karte darf bei einem regulären Betrieb des Kartenbearbeitungsgerätes jedoch nicht behindert werden. Eine durch Manipulation an dem Kartenbearbeitungsgerät irregulär in dem Kartenschacht angehaltene Karte wird daran erkannt, dass trotz Abgabe eines Transportsignals an die Kartentransportvorrichtung eine Änderung der Position der Karte nicht registriert wird. In diesem Fall wird die Haltevorrichtung aktiviert.

In Fortbildung der Erfindung weist die Haltevorrichtung wenigstens einen Greifer auf, welcher bei Aktivierung der Haltevorrichtung mit einer der Kartenseiten in Berührung gebracht wird, die Karte gegen ein Gegenlager presst und gegenüber der Karte mit einer relativ zu einer Herauszieh-Kraft großen Haltekraft ausgestattet ist. Das Gegenlager kann gemäß einer ersten Variante der Erfindung aus einer Begrenzungsfläche des Kartenschachtes oder einer in diesem befindlichen anderen feststehenden Fläche bestehen.

Gemäß einer zweiten Variante der Erfindung ist das Gegenlager ein dem Greifer gegenüberstehender, an der zweiten Kartenseite angreifender Gegengreifer. Während die erste Variante den Vorteil eines einfachen Antriebes für den Greifer hat, liegt der Vorteil der zweiten Variante darin, dass die Karte mitten im Kartenschacht gehalten und somit keinen Biegekräften ausgesetzt wird.

Der Greifer und/oder der Gegengreifer weist in dem mit der Kartenfläche in Berührung kommenden Bereich gegenüber der Karte einen hohen Reibungskoeffizienten auf.

Gemäß einer bevorzugten Ausprägung ist der Greifer und/oder der Gegengreifer in dem mit der Kartenfläche in Berührung kommenden Bereich mit wenigstens einer zahnartigen Spitze ausgestattet, welche sich in die Kartenfläche einzugraben vermag. Dies führt zu einer besonders zuverlässigen Rückhaltung der Karte, ohne sie jedoch zu zerstören oder unbrauchbar zu machen.

Der Greifer und/oder der Gegengreifer mag als Excenter ausgebildet sein, der an einer durch einen elektromechanischen Antrieb um ihre Achse drehbaren Welle drehfest angebracht und durch diese zwischen einer den Kartenschacht freigebenden Position und einer Halteposition verstellbar ist, wobei die Welle in Einzugsrichtung des Kartenbearbeitungsgerätes gesehen vor dem Berührungsbereich des Excenters mit der Karte liegt.

Vorzugsweise ist der Greifer und/oder der Gegengreifer als bogenförmiger Arm ausgebildet, dessen eines Ende an einer durch einen elektromechanischen Antrieb um ihre Achse drehbaren Welle drehfest angebrachten ist und dessen freies anderes Ende mit dem den hohen Reibungskoeffizienten aufweisenden Bereich oder mit der wenigstens einen zahnartigen Spitze ausgestattet ist, wobei die Welle in Einzugsrichtung des Kartenbearbeitungsgerätes gesehen vor dem Berührungsbereich des Greifers und/oder des Gegengreifers liegt.

Entsprechend einer alternativen Ausprägung der Erfindung ist der Greifer und/oder der Gegengreifer hebelartig ausgebildet, und in einem solchen Winkel gegen die Kartenfläche(n) anstellbar, dass mit Zunahme der aufgewendeten Herauszieh-Kraft die auf die Karte ausgeübte Haltekraft zunimmt.

Entsprechend einer bevorzugten Weiterbildung der Erfindung ist eine Mehrzahl von Greifern und/oder Gegengreifern über die Breite des Kartenschachtes verteilt. Dabei sind alle Greifer und/oder Gegengreifer gemeinsam in den Kartenschacht einbringbar, die Eintauchtiefe der einzelnen Greifer und/oder Gegengreifer in den Kartenschacht ist aber von den anderen Greifern und/oder Gegengreifern unabhängig.

Alternativ zur Auszugsblockade der Karte durch Greifer kann die Karte auch mittels eines Bolzens, der bei einem Manipulationsversuch die Karte durchdringt, im Kartenbearbeitungsgerät festgehalten werden. Vorzugsweise ist der Bolzen an einem Hebel befestigt, der quer zur Kartentransportrichtung montiert ist und beispielsweise mittels eines Exzenters motorisch zwischen einer ersten Stellung, in der der Bolzen den Kartentransportweg freigibt, und einer zweiten Stellung, in der der Bolzen die Karte durchdringt und den Kartentransport unterbindet, verstellbar ist.

Nachfolgend wird ein Ausführungsbeispiel der Erfindung anhand der beigefügten Zeichnungen erläutert.

Es zeigt
- Fig. 1: eine geschnittene Seitenansicht des Einzugsbereichs eines Kartenbearbeitungsgerätes,
- Fig. 2: den Einzugsbereich des Kartenbearbeitungsgerätes aus Fig. 1 in einer Draufsicht,
- Fig. 3: den Einzugsbereich des Kartenbearbeitungsgerätes aus Fig. 1 mit einer darin festgehaltenen Kreditkarte.

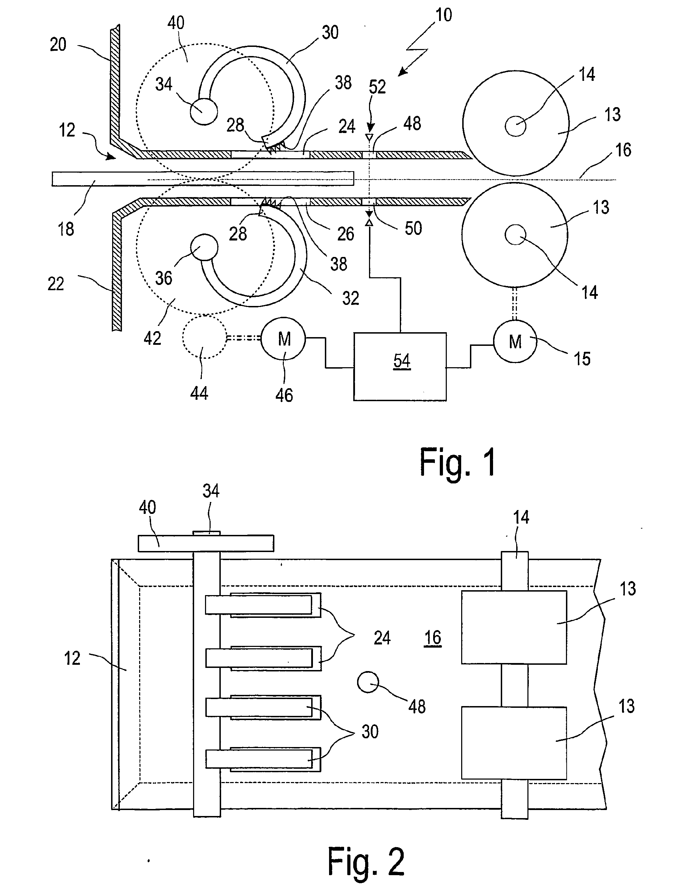

In den Figuren 1 und 2 ist der Einzugsbereich eines Kartenbearbeitungsgerätes 10 in einer geschnittenen Seitenansicht und in Draufsicht dargestellt. Es sind lediglich ein Karteneinführtrichter 12 und ein erstes Transportrollenpaar 13 dargestellt, deren obere und untere Rollen mit Hilfe ihrer Transportwellen 14 drehbar sind. Die Transportwellen 14 und alle weiteren, nicht dargestellten Kartentransportmittel des Kartenbearbeitungsgerätes 10 sind mit einem Kartentransportmotor 15 antriebsverbunden. Die Transportwellen 14 liegen senkrecht zur Einzugsrichtung E des Kartenbearbeitungsgerätes 10 und parallel zu einem Kartenschacht 16, der in Fig. 1 lediglich durch seine Mittellinie angedeutet ist. In den Kartenschacht 16 ist eine Kreditkarte 18 teilweise eingeführt.

Der Karteneinführtrichter 12 besteht aus einem oberen und einem unteren Begrenzungsteil 20, 22. In das obere Begrenzungsteile 20 ist eine Reihe von Ausnehmungen 24 und in das untere Begrenzungsteil 22 eine Reihe von Ausnehmungen 26 eingebracht. Die Ausnehmungen 24, 26 stehen einander gegenüber. In jede der Ausnehmungen 24, 26 ragt das freie Ende 28 eines bogenförmigen Greifers 30, 32 so weit hinein, dass der Kartenschacht 16 noch frei bleibt. Die Arme 30, 32 bestehen aus einem elastischen Material, beispielsweise Federstahl, mit einer progressiven Elastizitätskurve. Die oberen Arme 30 sind mit einer oberen Welle 34 und die unteren Arme 32 mit einer unteren Welle 36 verbunden. Das freie Ende 28 jedes Armes 30, 32 ist mit einer Anzahl von zahnartigen Spitzen 38 besetzt. Statt mit den Spitzen oder zusätzlich zu diesen kann das freie Ende 28 der Arme 30, 32 mit einem Material besetzt sein, das gegenüber dem Material der Kreditkarte 18 einen hohen Reibungskoeffizienten aufweist.

Die obere Welle 34 ist mit einem außerhalb des Kartenschachtes 16 liegenden oberen Zahnrad 40 drehverbunden, das mit einem drehfest auf die untere Welle 36 aufgesetzten unteren Zahnrad 42 kämmt. In dieses greift ein Ritzel 44 ein, welches durch einen Stellmotor 46 antreibbar ist. An Stelle des Zahnrad-Stellantriebes 40, 42, 44, 46 kann auch ein durch einen Elektromagneten betätigbarer Hebel-Stellantrieb zum Einsatz kommen.

In den Bereich zwischen den Ausnehmungen 24 bzw. 26 und dem Antriebsrollenpaar 13 ist in das obere Begrenzungsteil 20 eine obere Bohrung 48 und in das untere Begrenzungsteil 22 eine untere Bohrung 50 eingebracht. Die Bohrungen 48, 50 stehen einander gegenüber und werden von dem Strahl einer Vorrichtung zum Erfassen der Position der Kreditkarte 52 durchdrungen.

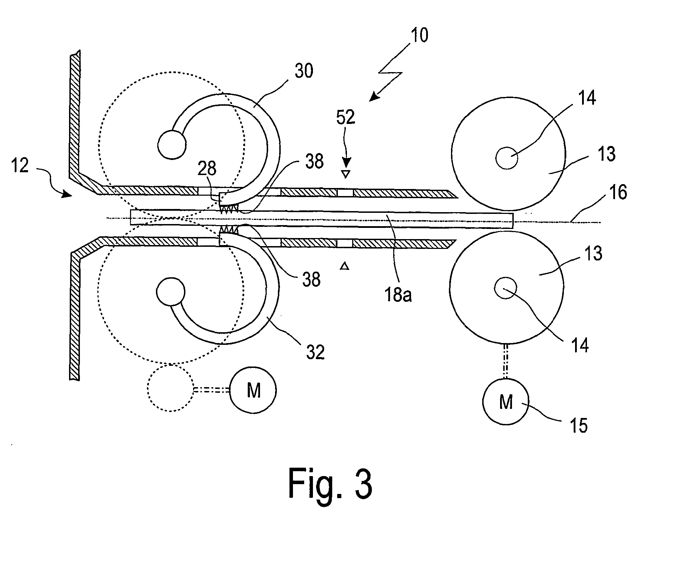

Fig. 3 zeigt den Einzugsbereich des Kartenbearbeitungsgerätes 10 mit einer durch eine nicht dargestellte Fangeinrichtung missbräuchlich in dem Kartenbearbeitungsgerät 10 festgehaltenen Kreditkarte 18a. Es ist zu erkennen, dass die Arme 30, 32 in ihre Halteposition verstellt sind und die zahnartigen Spitzen 38 an der Kreditkarte 18a angreifen.

Nachfolgend wird die Arbeitsweise des Kartenbearbeitungsgerätes 10 und der darin angeordneten Kartenhaltevorrichtung beschrieben. In der Bereitschaftsstellung des Kartenbearbeitungsgerätes 10 befinden sich die Arme 30, 32 in ihrer den Kartenschacht 16 freilassenden Stellung, wie dies in Fig. 1 dargestellt ist. Der Strahl der Lichtschranke 52 kann die beiden Bohrungen 48, 50 ungehindert durchdringen. Wird nun eine Kreditkarte 18 in Einschubrichtung E in den Kartenschacht 16 geschoben, so wird der Strahl der Lichtschranke 52 unterbrochen und deren Signal an eine Steuereinrichtung 54 übertragen. Diese schaltet daraufhin den Kartentransportmotor 15 ein, und die Kreditkarte 18 wird wenig später von den Transportrollen 13 erfasst. Die Unterbrechung des Strahls der Lichtschranke 52 startet in der Steuereinrichtung 54 eine Überwachungszeit, innerhalb derer die Lichtschranke 52 wieder freigegeben sein muss. Bei ordnungsgemäßem Kartentransport ist dies der Fall. Wird die Kreditkarte 18 jedoch in dem Kartenschacht 16 festgehalten, läuft die Überwachungszeit ab, ohne dass die Lichtschranke 52 freigegeben wird. Die Steuereinrichtung 54 bestromt daraufhin den Stellmotor 46, wodurch die Arme 30, 32 in ihre in Fig. 3 dargestellte Halteposition verstellt werden. Aufgrund des progressiven Elastizitätsmoduls der Arme 30, 32 vermögen diese sich dabei auf einem ersten Teil ihres Verstellweges an unterschiedliche Kartendicken und auch an eine zusätzlich in den Kartenschacht 16 eingebrachte Fangeinrichtung anzupassen. Auf dem zweiten Teil des Verstellweges nimmt die Elastizität der Arme 30, 32 so weit ab, dass sie im Verhältnis zu einer möglichen Auszieh-Kraft praktisch starr werden. Wird nun versucht, die Kreditkarte 18a mit Gewalt aus dem Kartenbearbeitungsgerät 10 herauszuziehen, so graben sich die Spitzen 38 in die jeweilige Kartenoberfläche ein und die Arme 30, 32 werden weiter aufeinander zu geschwenkt. Der Abstand zwischen den freien Enden 28 der oberen und unteren Arme 30, 32 wird dadurch noch kleiner und die Rückhaltekraft der Haltevorrichtung noch größer, so dass es praktisch unmöglich wird, die Kreditkarte 18a aus dem Kartenbearbeitungsgerät 10 heraus zu ziehen. Die Kreditkarte 18a bleibt dabei bis auf die die Kartenfunktion nicht beeinträchtigenden Eindrücke der Spitzen 38 unbeschädigt. Die Rückstellung der Arme 30, 32 in ihre Freigabestellung kann nur von autorisiertem Personal vorgenommen werden.

## Patentansprüche

1. Kartenbearbeitungsgerät (10), umfassend einen Kartenschacht (16), eine Kartentransportvorrichtung (13, 14, 15), eine Vorrichtung (52) zum Erfassen der Position oder des Verweilens einer Karte (18, 18a) in dem Kartenschacht (16) **dadurch gekennzeichnet, daß** eine Haltevorrichtung (28, 30, 32, 38) für eine durch Manipulation an dem Kartenbearbeitungsgerät (10) in dem Kartenschacht (16) irregulär angehaltene Karte (18a) vorgesehen ist, welche aktiviert wird, wenn trotz Abgabe eines Transportsignals an die Kartentransportvorrichtung (13, 14, 15) eine Änderung der Position der Karte (18a) nicht erkannt wird.

2. Kartenbearbeitungsgerät (10) nach Anspruch 1, dessen Haltevorrichtung wenigstens einen Greifer (30) aufweist, welcher bei Aktivierung der Haltevorrichtung (28, 30, 32, 38) mit einer der Kartenseiten in Berührung gebracht wird, die Karte (18a) gegen ein Gegenlager presst und gegenüber der Karte (18a) mit einer relativ zu einer Herauszieh-Kraft großen Haltekraft ausgestattet ist.

3. Kartenbearbeitungsgerät (10) nach Anspruch 2, bei dem das Gegenlager ein dem Greifer (30) gegenüberstehender, an der zweiten Kartenseite angreifender Gegengreifer (32) ist.

4. Kartenbearbeitungsgerät (10) nach Anspruch 2 oder 3, dessen Greifer (30, 32) in dem mit der Kartenfläche in Berührung kommenden Bereich gegenüber der Karte (18a) einen hohen Reibungskoeffizienten aufweist.

5. Kartenbearbeitungsgerät (10) nach Anspruch 2 oder 3, dessen Greifer (30, 32) in dem mit der Kartenfläche in Berührung kommenden Bereich mit wenigstens einer zahnartigen Spitze (38) ausgestattet ist, welche sich wenigstens bei Anwendung einer Herauszieh-Kraft in die Kartenfläche einzugraben vermag.

6. Kartenbearbeitungsgerät (10) nach einem der Ansprüche 2 bis 5, dessen Greifer (30) und/oder Gegengreifer (32) als Excenter ausgebildet ist, der an einer durch einen elektromechanischen Antrieb (46) um ihre Achse drehbaren Welle (34, 36) drehfest angebracht und durch diese zwischen einer den Kartenschacht (16) freigebenden Position und einer Halteposition verstellbar ist, wobei die Welle in Einzugsrichtung des Kartenbearbeitungsgerätes (10) gesehen vor dem Berührungsbereich des Excenters mit der Karte (18a) liegt.

7. Kartenbearbeitungsgerät (10) nach Anspruch 6, dessen Exzenter ein bogenförmig ausgebildeter Arm ist, dessen eines Ende an der Welle (34; 36) drehfest ist und dessen freies anderes Ende (28) mit dem den hohen Reibungskoeffizienten aufweisenden Bereich oder mit der wenigstens einen zahnartigen Spitze (38) ausgestattet ist.

8. Kartenbearbeitungsgerät (10) nach wenigstens einem der Ansprüche 2 bis 5, dessen Greifer und/oder Gegengreifer hebelartig ausgebildet, zwischen einer den Kartenschacht (16) freigebenden Position und einer Halteposition verstellbar und in einem solchen Winkel gegen die Kartenfläche(n) anstellbar ist (sind), dass mit Zunahme der aufgewendeten Herauszieh-Kraft die auf die Karte (18a) ausgeübte Haltekraft zunimmt.

9. Kartenbearbeitungsgerät (10) nach einem der Ansprüche 2 bis 8, bei dem eine Mehrzahl von Greifern (30) und/oder Gegengreifern (32) über die Breite des Kartenschachtes (16) verteilt ist.

10. Kartenbearbeitungsgerät (10) nach wenigstens einem der vorhergehenden Ansprüche, bei dem alle Greifer (30) und/oder Gegengreifer (32) gemeinsam in den Kartenschacht (16) einbringbar sind, die Eintauchtiefe jedes einzelnen Greifers (30) und/oder Gegengreifers (32) in den Kartenschacht (16) aber von den anderen Greifern und/oder Gegengreifern unabhängig ist.

11. Kartenbearbeitungsgerät (10) nach den Ansprüchen 7 und 10, dessen Greifer (30, 32) aus einem elastischen Material bestehen und ein progressives Elastizitätsmodul aufweisen.

12. Kartenbearbeitungsgerät (10) nach Anspruch 1, dessen Haltevorrichtung mindestens einen Bolzen aufweist, welcher bei Aktivierung der Haltevorrichtung mit einer der Kartenseiten in Berührung gebracht wird und die Karte durchdringt.

## Claims

1. Card-processing apparatus (10), comprising a card tray (16), a card-transporting device (13, 14, 15), a device (52) for sensing the position or detention of a card (18, 18a) in the card tray (16), **characterized in that** a holding device (28, 30, 32, 38) is provided for a card (18a) that has stopped in an irregular manner in the card tray (16) due to manipulation of the card-processing apparatus (10), which is activated if a change in the position of the card (18a) is not detected even though a conveying signal has been issued to the card-conveying device (13, 14, 15).

2. Card-processing apparatus (10) according to Claim 1, the holding device of which has at least one gripper (30), which is brought into contact with one of the sides of the card when the holding device (28, 30, 32, 38) is activated, presses the card (18a) against a counter-bearing and is provided with a great holding force with respect to the card (18a) in relation to a pulling-out force.

3. Card-processing apparatus (10) according to Claim 2, in which the counter-bearing is a counter-gripper (32) located opposite the gripper (30) and acting on the second side of the card.

4. Card-processing apparatus (10) according to Claim 2 or 3, the gripper (30, 32) of which has in the region that comes into contact with the surface of the card a high friction coefficient with respect to the card.

5. Card-processing apparatus (10) according to Claim 2 or 3, the gripper (30, 32) of which is provided in the region that comes into contact with the surface of the card with at least one tooth-like point (38), which is able to dig into the surface of the card, at least when a pulling-out force is applied.

6. Card-processing apparatus (10) according to one of Claims 2 to 5, the gripper (30) and/or counter-gripper (32) of which is formed as an eccentric which is attached in a rotationally fixed manner to a shaft (34, 36), which can be rotated about its axis by an electromechanical drive (46), and is adjustable by said shaft between a position releasing the card tray (16) and a holding position, the shaft lying ahead of the region where the eccentric is in contact with the card (18a), as seen in the drawing-in direction of the card-processing apparatus (10).

7. Card-processing apparatus (10) according to Claim 6, the eccentric of which is an arcuately formed arm, one end of which is rotationally fixed to the shaft (34; 36) and the other, free end (28) of which is provided with the region having the high friction coefficient or with the at least one tooth-like point (28).

8. Card-processing apparatus (10) according to at least one of Claims 2 to 5, the gripper(s) and/or counter-gripper(s) of which is (are) formed in the manner of a lever, is (are) adjustable between a position releasing the card tray (16) and a holding position and can be placed at such an angle against the surface(s) of the card that the holding force exerted on the card (18a) increases as the expended pulling-out force increases.

9. Card-processing apparatus (10) according to one of Claims 2 to 8, in which a plurality of grippers (30) and/or counter-grippers (32) are distributed over the width of the card tray (16).

10. Card-processing apparatus (10) according to at least one of the preceding claims, in which all the grippers (30) and/or counter-grippers (32) can be brought jointly into the card tray (16), but the depth of penetration of the individual grippers (30) and/or counter-grippers (32) into the card tray (16) is independent of the other grippers and/or counter-grippers.

11. Card-processing apparatus (10) according to Claims 7 and 10, the grippers (30, 32) of which consist of an elastic material and have a progressive modulus of elasticity.

12. Card-processing apparatus (10) according to Claim 1, the holding device of which has at least one bolt, which is brought into contact with one of the sides of the card and penetrates the card when holding device is activated.

## Revendications

1. Appareil (10) de traitement de carte comprenant un puits (16) à carte, un dispositif (13, 14, 15) de transport de carte, un dispositif (52) de détection de la position ou du séjour d'une carte (18, 18a) dans le puits (16) à carte, **caractérisé en ce qu'**il est prévu un dispositif (28, 30, 32, 38) de maintien d'une carte (18a) maintenue de manière irrégulière dans le puits (16) à carte par manipulation sur l'appareil (10) de traitement de carte, dispositif (28, 30, 32, 38) qui est activé lorsque, en dépit de l'émission d'un signal de transport au dispositif (13, 14, 15) de transport de carte, une modification de la position de la carte (18a) n'est pas détectée.

2. Appareil (10) de traitement de carte suivant la revendication 1, dont le dispositif de maintien a au moins un dispositif (30) de préhension qui, lors de l'activation du dispositif (28, 30, 32, 38) de maintien, est mis en contact avec l'une des faces de la carte, pousse la carte (18a) sur une butée et a, par rapport à la carte (18a), une force de maintien relativement grande par rapport à une force de retrait.

3. Appareil (10) de traitement de carte suivant la revendication 2, dans lequel la butée est un dispositif (32) antagoniste de préhension opposé au dispositif (30) de préhension et attaquant la deuxième face de la carte.

4. Appareil (10) de traitement de carte suivant la revendication 2 ou 3, dont le dispositif (30, 32) de préhension a, dans la partie venant en contact avec la surface de la carte, un coefficient de frottement grand par rapport à celui de la carte (18a).

5. Appareil (10) de traitement de carte suivant la revendication 2 ou 3, dont le dispositif (30, 32) de préhension a, dans la partie venant en contact avec la surface de la carte, au moins une pointe (38) en forme de dent, qui peut s'enfoncer dans la surface de la carte au moins lors de l'application d'une force de retrait.

6. Appareil (10) de traitement de carte suivant l'une des revendications 2 à 5, dont le dispositif (30) de préhension et/ou le dispositif (32) antagoniste de préhension est constitué sous la forme d'un excentrique qui est solidaire en rotation d'un arbre (34, 36) pouvant être entraîné autour de son axe par un entraînement (46) électromécanique et peut être mis par cet axe entre une position dégageant le puits (16) à carte et une position de maintien, l'arbre étant, tel que vu dans le sens d'introduction de l'appareil (10) de traitement de carte, en amont de la partie de contact de l'excentrique avec la carte (18).

7. Appareil (10) de traitement de carte suivant la revendication 6, dont l'excentrique est un bras arqué dont l'une des extrémités est solidaire de l'arbre (34, 36) et dont l'autre extrémité (28) libre est munie de la partie ayant le grand coefficient de frottement ou ayant la au moins une pointe (38) en forme de dent.

8. Appareil (10) de traitement de carte suivant au moins l'une des revendications 2 à 5, dont le dispositif de préhension et/ou le dispositif antagoniste de préhension est constitué sous forme de levier pouvant être mis entre une position dégageant le puits (16) à carte et une position de maintien pouvant faire un angle tel par rapport à la ou les surfaces de la carte qu'au fur et à mesure qu'augmente la force de retrait appliquée, la force de maintien appliquée à la carte (18a) augmente.

9. Appareil (10) de traitement de carte suivant l'une des revendications 2 à 8, dans lequel une pluralité de dispositifs (30) de préhension et/ou de dispositifs (32) antagonistes de préhension est répartie sur la largeur du puits (16) à carte.

10. Appareil (10) de traitement de carte suivant au moins l'une des revendications précédentes, dans lequel tous les dispositifs (30) de préhension et/ou tous les dispositifs (32) antagonistes de préhension peuvent être introduits conjointement dans le puits (16) à carte, la profondeur de pénétration de chaque dispositif (30) individuel de préhension et/ou de chaque dispositif (32) antagoniste de préhension dans le puits (16) à carte étant toutefois indépendante de celle des autres dispositifs de préhension et/ou antagonistes de préhension.

11. Appareil (10) de traitement de carte suivant les revendications 7 et 10, dont les dispositifs (30, 32) de préhension sont en un matériau élastique et ont un module d'élasticité progressif.

12. Appareil (10) de traitement de carte suivant la revendication 1, dont le dispositif de maintien a au moins un axe qui, lors de l'activation du dispositif de maintien, est mis en contact avec une face de la carte et traverse la carte.
